(19) Europäisches Patentamt
European Patent Office
Office européen des brevets

(11) EP 3 964 874 A1

(12) **EUROPEAN PATENT APPLICATION**
published in accordance with Art. 153(4) EPC

(43) Date of publication:
**09.03.2022 Bulletin 2022/10**

(21) Application number: **20831950.9**

(22) Date of filing: **28.06.2020**

(51) International Patent Classification (IPC):
***G02B 13/00*** *(2006.01)* ***G02B 13/02*** *(2006.01)*
***G02B 13/18*** *(2006.01)*

(52) Cooperative Patent Classification (CPC):
**G02B 1/00; G02B 9/62; G02B 13/00; G02B 13/02; G02B 13/18**

(86) International application number:
**PCT/CN2020/098601**

(87) International publication number:
**WO 2020/259696 (30.12.2020 Gazette 2020/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.06.2019 CN 201910572891**
**27.09.2019 CN 201910940153**

(71) Applicant: **Huawei Technologies Co., Ltd.**
**Shenzhen, Guangdong 518129 (CN)**

(72) Inventors:
- **CHIANG, Yita**
  **Shenzhen, Guangdong 518129 (CN)**
- **YE, Haishui**
  **Shenzhen, Guangdong 518129 (CN)**
- **GE, Hong**
  **Shenzhen, Guangdong 518129 (CN)**
- **LU, Jianlong**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

# (54) OPTICAL LENS GROUP, CAMERA, AND TERMINAL DEVICE

(57) Embodiments of this application disclose an optical lens assembly (10), a camera, and a terminal device (100). The optical lens assembly (10) includes a plurality of lenses (LI, L2, L3, L4, L5, and L6) successively arranged from an object side to an image side in a direction along an optical axis. At least one of the plurality of lenses is made of a first material. A coefficient of a relative refractive index to a temperature drift of the first material is less than that of a plastic material. The first three (LI, L2, and L3) of the plurality of lenses (LI, L2, L3, L4, L5, and L6) in a direction from the object side to the image side are successively a first lens (LI), a second lens (L2), and a third lens (3). The first lens (LI) has a positive focal power, the second lens (L2) has a negative focal power, and the third lens (3) has a positive focal power. An effective focal length of the optical lens assembly (10) is f. A distance from an object-side surface (SI) of the first lens (LI) to an imaging plane (S15) on the optical axis is TTL, and TTL/f ≤ 0.96. In this application, a problem of a temperature drift effect is resolved by defining a material of a lens and focal powers of the first three lenses and combining focal powers of remaining lenses, thereby improving an imaging effect.

STO
L1
L2
L3
L4
L5
L6
IRCF
S1
S2
S3
S4
S5
S6
S7
S8
S9
S10
S11
S12
S13
S14
S15

FIG. 2a



Printed by Jouve, 75001 PARIS (FR)

## Description

This application claims priority to Chinese Patent Application No. 201910572891.0, filed with the China National Intellectual Property Administration on June 27, 2019, and entitled "LONG-FOCUS LENS ASSEMBLY, IMAGE CAPTURING APPARATUS, AND PORTABLE TERMINAL DEVICE IN PHOTOGRAPHIC OPTICAL SYSTEM", and Chinese Patent Application No. 201910940153.7, filed with the China National Intellectual Property Administration on September 27, 2019, and entitled "OPTICAL LENS ASSEMBLY, CAMERA, AND TERMINAL DEVICE", which are incorporated herein by reference in their entireties.

## TECHNICAL FIELD

The present invention belongs to the field of optical imaging technologies, and in particular, relates to an optical lens assembly and a terminal device in a photographic optical system.

## BACKGROUND

A portable terminal device is increasingly widely applied, and a camera is a typical component of the terminal device. With continuous development of portable devices such as a mobile phone, application of cameras is increasingly diversified. In a combined multi-camera zoom system, a camera of a terminal device develops towards a long-focus lens assembly.

Generally, a long-focus photographic lens assembly of a terminal device uses a structure design of four to six plastic lenses, and an effective focal length and a back focal length of an optical lens assembly change with temperature, which is referred to as a temperature drift effect. With an increase in the effective focal length of the optical lens assembly, the temperature drift effect of the lens assembly becomes more obvious. The problem of the temperature drift effect severely affects user experience.

How to resolve the temperature drift effect of the long-focus lens assembly is a research and development direction of the industry.

## SUMMARY

This application provides an optical lens assembly, a camera, and a terminal device. The optical lens assembly is a long-focus lens, and a problem of a temperature drift effect is resolved by defining a material of a lens and focal powers of the first three lenses and combining focal powers of remaining lenses, thereby improving an imaging effect and providing good user experience.

According to a first aspect, an embodiment of the present invention provides an optical lens assembly, including a plurality of lenses successively arranged from an object side to an image side in a direction along an optical axis, where a quantity of lenses may be four, five, six, seven, or the like. At least one of the plurality of lenses is made of a first material. A coefficient of a relative refractive index to a temperature drift of the first material is less than that of a plastic material. The first material may be a glass material, and other lenses are made of the plastic material. The first three of the plurality of lenses in a direction from the object side to the image side are successively a first lens, a second lens, and a third lens. The first lens has a positive focal power, the second lens has a negative focal power, and the third lens has a positive focal power. An effective focal length of the optical lens assembly is f. A distance from an object-side surface of the first lens to an imaging plane on the optical axis is TTL, and $TTL/f \leq 0.96$. The distance from the object-side surface of the first lens to the imaging plane on the optical axis, that is, TTL, specifically refers to a distance between an intersecting point of the object-side surface of the first lens and the optical axis and an intersecting point of the imaging plane and the optical axis. In this application, the material of the at least one lens is limited to the first material whose coefficient of a relative refractive index to a temperature drift is less than that of the plastic material, and focal powers of the first lens, the second lens, the third lens, and the remaining lenses are limited. In this way, a temperature drift effect of the optical lens assembly can be suppressed and a comprehensive chromatic aberration problem can be resolved. In addition, an imaging effect of the optical lens assembly can be ensured even in a high temperature environment, and a total length of the optical lens assembly can be relatively short.

In a possible implementation, the coefficient of the relative refractive index to the temperature drift of the first material is $\beta$ (indicating a temperature-dependent change coefficient of a refractive index of the material in a medium such as air), and $-9\times10^{-5} \leq \beta \leq 9\times10^{-5}$. In this implementation, a range of the coefficient of the relative refractive index to the temperature drift of the first material is limited, and the focal powers are allocated, so that a relatively small system temperature drift coefficient can be obtained for the optical lens assembly. Specifically, the coefficient of the relative refractive index to the temperature drift of the first material is $\beta$, and $-9\times10^{-5} \leq \beta \leq 0$. In other words, the coefficient of the relative refractive index to the temperature drift of the first material is a negative value, and may be an opposite number of the coefficient of the relative refractive index to the temperature drift of the plastic material. For example, a glass material. A coefficient of a relative refractive index to a temperature drift of a lens made of the plastic material is a positive value, and a coefficient of a relative refractive index to a temperature drift of the lens made of the plastic material can be partially offset by setting a negative coefficient of a relative refractive index to a temperature drift. Overall, the relatively small system temperature drift coefficient can be obtained for the optical lens assembly.

In a possible implementation, a temperature drift coefficient of the optical lens assembly is $\Delta f/\Delta°C$, and $-2.6\ \mu m/°C \leq \Delta f/\Delta°C \leq 2.6\ \mu m/°C$. This helps suppress a temperature drift effect of the optical lens assembly. In this implementation, a range of the temperature drift coefficient is limited, thereby ensuring that the optical lens assembly meets a use requirement. To optimize a design architecture of the optical lens assembly, the range of the temperature drift coefficient may be specifically $-1\ \mu m/°C \leq \Delta f/\Delta°C \leq 1\ \mu m/°C$. A smaller absolute value of the temperature drift coefficient $\Delta f/\Delta°C$ of the optical lens assembly indicates a better imaging effect.

In a possible implementation, a curvature radius of an object-side surface of the second lens is R21, a curvature radius of an image-side surface of the second lens is R22, and the following condition is met: $|f/R21| + |f/R22| < 10$. This helps correct a comprehensive aberration of the optical lens assembly. When $|f/R21| + |f/R22|$ is greater than or equal to 10, correction of the comprehensive aberration of the optical lens assembly is hindered, and an imaging effect is affected.

In a possible implementation, thicknesses are allocated based on density of lens materials, so that weights of front and rear parts of the long-focus lens assembly are uniform, and a center of gravity is located near a center of the optical lens assembly, thereby ensuring a stable posture of the optical lens assembly. The center of gravity of the optical lens assembly is located at a central position of the optical lens assembly, and the central position of the optical lens assembly is a midpoint position between an intersecting point of the optical axis and an object side of the first lens and an intersecting point of the optical axis and an image side of the last lens. In this application, the central position is not limited to the midpoint position, and may be within a range near the midpoint position, provided that weights of front and rear parts of a camera are uniform when all lenses are assembled in a lens barrel of the camera. In this application, the at least one of the plurality of lenses is made of the first material, for example, glass, and the remaining lenses are made of the plastic material. The lens made of the first material is heavier than the other lenses, and a center-of-gravity shift is likely to occur. Therefore, during use of the camera, in a process in which a voice coil motor drives the camera to implement image stabilization, image stabilization is not easy to be implemented due to the center-of-gravity shift. However, in this application, the position of the center of gravity is limited, so that a posture of the optical lens assembly is stable. In this way, an image stabilization problem of the camera is more easily resolved during use.

In a possible implementation, the plurality of lenses are six lenses: the first lens, the second lens, the third lens, a fourth lens, a fifth lens, and a sixth lens that are successively arranged from the object side to the image side. The optical lens assembly further includes a vignetting stop, and the vignetting stop is disposed on an object side of the first lens and/or disposed on an image side of the sixth lens. The vignetting stop can intercept imaging light with a large aberration (in other words, intercept an off-axis beam), thereby improving imaging quality and helping reduce an outer diameter of the optical lens assembly.

In a possible implementation, a dispersion coefficient (an Abbe number) of the lens made of the first material is V, and the following condition is met: $15 \leq V \leq 100$. In this implementation, a chromatic aberration of the optical lens assembly can be corrected through proper allocation of a focal power and selection of a dispersion coefficient, to obtain an imaging effect with relatively high definition. The dispersion coefficient is an important index for measuring imaging definition of the lens, and is usually expressed by using an Abbe number (a dispersion coefficient). A larger Abbe number indicates smaller dispersion. Contrarily, a smaller Abbe number indicates larger dispersion and poorer imaging definition. That is, the Abbe number indicates a separation effect of a material on a light source (a lightwave spectrum). A beam of parallel white light focuses on one point after passing through an ideal lens. However, because the material presents different refractive indexes for different lightwave lengths, a separation effect on light is produced, and the light focuses on a plurality of points (forming a "rainbow" phenomenon). Generally, there is such a rule: A larger refractive index of the material indicates larger dispersion, namely, a smaller Abbe number.

In a possible implementation, the third lens is made of the first material, and at least one surface of the third lens is a spherical surface. A spherical radius of the spherical surface of the third lens is R, and $-100\ mm < R < 100\ mm$. In this implementation, the third lens is made of the first material. Taking a glass material as an example, manufacturing and molding of the third lens are more difficult than those of a lens made of a plastic material. In addition, the spherical radius is excessively large, thereby causing difficulty in ensuring a surface shape of the lens. In this application, the spherical radius is limited to be between -100 millimeters and 100 millimeters. This helps reduce molding difficulty of the third lens (which is made of the first material such as a glass material), and ensures manufacturability of a glass lens.

In a possible implementation, a focal length of the third lens is f3, and the following condition is met: $0.1 \leq f3/f \leq 3$. The lens made of the first material occupies a main focal power in the optical lens and the lens assembly provided in this application and has greatest impact on optical performance. Therefore, in this implementation, a range of a ratio of the focal length of the third lens to the effective focal length of the optical lens assembly is limited, to adjust the optical performance of the optical lens assembly.

In a possible implementation, the plurality of lenses are six lenses: the first lens, the second lens, the third lens, a fourth lens, a fifth lens, and a sixth lens that are successively arranged from the object side to the image side. A spacing between the fourth lens and the fifth lens is SP4, a spacing between an object-side vertex position of the first lens and an image-side vertex position of the sixth lens is LT, and $SP4/LT \leq 0.5$. In this implementation, the spacing between the fourth lens and the fifth lens is limited, to facilitate process stability of the optical lens assembly. Specifically, when a spacing between lenses is large, assembly precision is not easy to ensure, and assembly difficulty is relatively large, thereby affecting a yield rate of the optical lens. In this implementation, it is ensured that the ratio of the spacing to LT is less than 0.5, so that the spacing is within a proper range, assembly difficulty is reduced, and the yield rate is increased. A spacing between adjacent lenses is a distance between adjacent optical surfaces in the direction along the optical axis.

In a possible implementation, the plurality of lenses are six lenses: the first lens, the second lens, the third lens, a fourth lens, a fifth lens, and a sixth lens that are successively arranged from the object side to the image side. The fourth lens is made of the first material, and at least one surface of the fourth lens is a spherical surface. A spherical radius of the spherical surface of the fourth lens is R, and $-100\ mm < R < 100\ mm$. In this implementation, it is favorable to reduce molding difficulty of the fourth lens (which is made of the first material such as glass material), and manufacturability of a glass lens is ensured.

In a possible implementation, a focal length of the fourth lens is f4, and the following condition is met: $0.1 \leq f4/f \leq 3$.

In a possible implementation, a spacing between the fifth lens and the sixth lens is SP5, a spacing between an object-side vertex position of the first lens and an image-side vertex position of the sixth lens is LT, and $SP5/LT \leq 0.2$. In this implementation, the spacing between the fifth lens and the sixth lens is limited, to help reduce lens assembly difficulty.

According to a second aspect, an embodiment of the present invention provides a camera, including a lens barrel and the optical lens assembly according to any one of the foregoing implementations. The optical lens assembly is mounted in the lens barrel.

According to a third aspect, this application provides a terminal device, including the camera.

In this application, the first material whose coefficient of a relative refractive index to a temperature drift is less than that of the plastic material is selected as a material of the at least one lens in the optical lens assembly, so that an optical effect of the optical lens assembly can be suppressed, and parameters such as a focal length and an MTF (Modulation Transfer Function (modulation transfer function)) of the optical lens assembly are insensitive to temperature. This helps reduce a stroke margin used by a voice coil motor to compensate for a temperature drift effect of the lens assembly, or cancel a temperature drift effect compensation algorithm of a photographing system, thereby improving user experience and achieving excellent optical quality.

## BRIEF DESCRIPTION OF DRAWINGS

To describe the technical solutions in the embodiments of the present invention or in the background more clearly, the following briefly describes the accompanying drawings used in describing the embodiments of the present invention or the background.

FIG. 1 is a schematic diagram of an optical lens assembly used in a terminal device according to this application;
FIG. 2a is a schematic diagram of an optical lens assembly according to Embodiment 1 of this application;
FIG. 2b shows an axial spherical aberration curve of an optical system according to Embodiment 1;
FIG. 2c shows an astigmatic field curve of an optical system according to Embodiment 1;
FIG. 2d shows a distortion curve of an optical system according to Embodiment 1;
FIG. 2e shows a longitudinal chromatic aberration curve of an optical system according to Embodiment 1;
FIG. 3a is a schematic diagram of an optical lens assembly according to Embodiment 2 of this application;
FIG. 3b shows an axial spherical aberration curve of an optical system according to Embodiment 2;
FIG. 3c shows an astigmatic field curve of an optical system according to Embodiment 2;
FIG. 3d shows a distortion curve of an optical system according to Embodiment 2;
FIG. 3e shows a longitudinal chromatic aberration curve of an optical system according to Embodiment 2;
FIG. 4a is a schematic diagram of an optical lens assembly according to Embodiment 3 of this application;
FIG. 4b shows an axial spherical aberration curve of an optical system according to Embodiment 3;
FIG. 4c shows an astigmatic field curve of an optical system according to Embodiment 3;
FIG. 4d shows a distortion curve of an optical system according to Embodiment 3; and
FIG. 4e shows a longitudinal chromatic aberration curve of an optical system according to Embodiment 3.

## DESCRIPTION OF EMBODIMENTS

The following describes the embodiments of the present invention with reference to the accompanying drawings in the embodiments of the present invention.

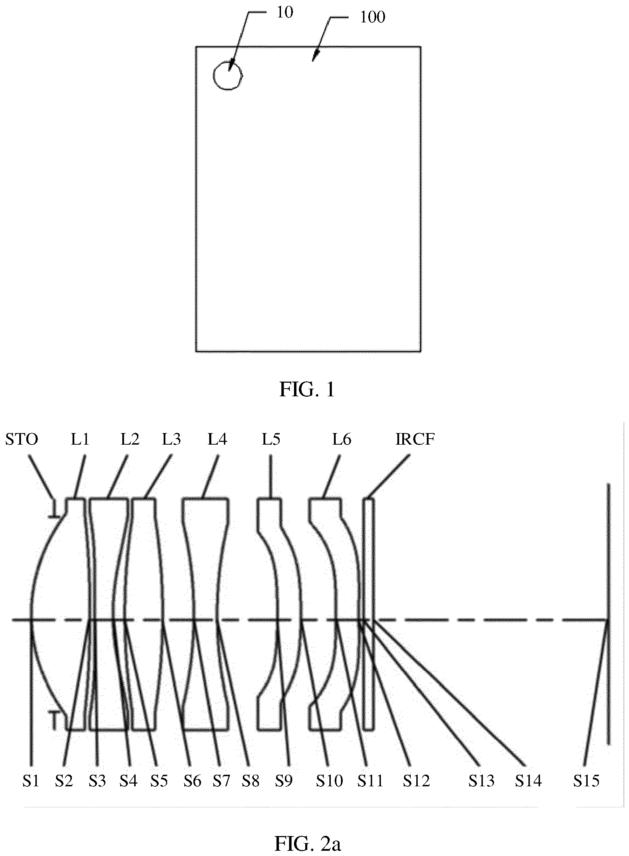

Referring to FIG. 1, an optical lens assembly 10 involved in this application may be a long-focus photographing system, and is used in a camera in a terminal device 100. The terminal device 100 may be a portable terminal such as a mobile phone or a tablet computer. The optical lens assembly 10 may be a long-focus lens assembly, and the optical lens assembly 10 is mounted in a lens barrel of the camera. The camera is assembled inside the terminal device 100, and may be a rear-facing camera or a front-facing camera of the terminal device 100, or a telescopic camera that may protrude from a housing of the terminal device 100.

The optical lens assembly provided in this application includes six lenses. The six lenses are successively distributed from an object side to an image side in a direction along an optical axis: a first lens, a second lens, a third lens, a fourth lens, a fifth lens, and a sixth lens. At least one of the six lenses is made of a first material. A coefficient of a relative refractive index to a temperature drift of the first material is less than that of a plastic material. For example, the first material may be a glass material. A refractive index of the glass material is insensitive to a temperature drift coefficient. Specifically, a coefficient of a relative refractive index to a temperature drift of the glass material is a negative value, the coefficient of the relative refractive index to the temperature drift of the plastic material is a positive value, and the coefficient of the relative refractive index to the temperature drift of the glass material is an opposite number of the coefficient of the relative refractive index to the temperature drift of the plastic material. The first lens has a positive focal power, the second lens has a negative focal power, and the third lens has a positive focal power. An effective focal length of the optical lens assembly is f. A distance from an object-side surface of the first lens to an imaging plane on the optical axis is TTL, and TTL/f ≤ 0.96. A temperature effect of the optical lens assembly can be relieved by selecting a special material for the at least one lens, that is, selecting the first material, and combining allocation of the focal powers of the first three lenses, so that parameters such as an effective focal length and an MTF of the optical lens assembly are insensitive to temperature. This helps reduce a stroke margin used by a voice coil motor to compensate for a temperature drift effect of the lens assembly, or cancel a temperature drift effect compensation algorithm of the optical lens assembly, thereby improving user experience.

Specifically, the glass material may be crown glass, flint glass, borosilicate glass, quartz glass, or the like.

Specifically, main focal powers of the optical lens assembly are allocated to the first three lenses (namely, the first lens, the second lens, and the third lens described in this application) in the optical lens assembly that are distributed from the object side to the image side, the first lens has a positive focal power, the second lens has a negative focal power, and the third lens has a negative focal power, so that a chromatic aberration of the optical lens assembly can be better corrected, and imaging quality is improved.

An aspherical curve equation of a lens is defined as follows:

$$z = \frac{cr^2}{1+\sqrt{1-(1+k)c^2r^2}} + \sum_{i=1}^{N} \alpha_i \rho^{2i} ,$$

Z is a vertical distance from a point that is on an aspherical surface and whose distance to the optical axis is r to a tangent plane that is tangent to an intersecting point of the aspherical surface and the optical axis;

r is a vertical distance between a point on an aspherical curve and the optical axis; and

C is a curvature, k is a cone coefficient, and $\alpha_i$ is an $i^{th}$-order aspherical coefficient.

The following describes this application in detail by using seven specific embodiments.

The following describes this application in detail by using three specific embodiments.

### Embodiment 1

As shown in FIG. 2a, a dash-dot line in the middle indicates an optical axis, a left side of an optical lens assembly is an object side, and a right side of the optical lens assembly is an image side. In the optical lens assembly provided in this embodiment, from the object side to the image side along the optical axis, there are a vignetting stop ST1, a first lens L1, a second lens L2, a third lens L3, an aperture stop STO, a fourth lens L4, a fifth lens L5, and a sixth lens L6. An infrared filter element IRCF and an electronic photosensitive element may be placed on an imaging plane.

The first lens L1 has a positive focal power and is made of a resin material (the resin material is also referred to as a plastic material, and the same explanation is used in the following descriptions). An object-side surface S1 of the first lens L1 near the optical axis is a convex surface. An image-side surface S2 of the first lens L1 near the optical axis is a concave surface. Both the object-side surface S1 and the image-side surface S2 are aspherical surfaces.

The second lens L2 has a negative focal power and is made of a resin material. An object-side surface S3 of the second lens L2 near the optical axis is a convex surface. An image-side surface S4 of the second lens L2 near the optical axis is a concave surface. Both the object-side surface S3 and the image-side surface S4 are aspherical surfaces.

The third lens L3 has a positive focal power and is made of a glass material. An object-side surface S5 of the third lens L3 near the optical axis is a convex surface. An image-side surface S6 of the third lens L3 near the optical axis is a convex surface. Both the object-side surface S5 and the image-side surface S6 are spherical surfaces.

The fourth lens L4 has a negative focal power and is made of a resin material. An object-side surface S7 of the fourth lens L4 near the optical axis is a concave surface. An image-side surface S8 of the fourth lens L4 near the optical axis is a concave surface. Both the object-side surface S7 and the image-side surface S8 are aspherical surfaces.

The fifth lens L5 has a positive focal power and is made of a resin material. An object-side surface S9 of the fifth lens L5 near the optical axis is a concave surface. An image-side surface S10 of the fifth lens L5 near the optical axis is a convex surface. Both the object-side surface S9 and the image-side surface S10 are aspherical surfaces.

The sixth lens L6 has a negative focal power and is made of a resin material. An object-side surface S11 of the sixth lens L6 near the optical axis is a concave surface. An image-side surface S12 of the sixth lens L6 near the optical axis is a concave surface. Both the object-side surface S11 and the image-side surface S12 are aspherical surfaces.

Both an object-side surface S13 and an image-side surface S14 of the infrared filter element IRCF are planar surfaces.

More generally, the resin material may be replaced with other transparent plastic. Usually, a relative refractive index of plastic is positive. Plastic is a material that can be formed through flow forming in a processing process by using a polymer material (or which is directly polymerized with a monomer in the processing process) as a main component and additives such as a plasticizer, a filler, lubricant, and a coloring agent as auxiliary components. The resin material is a type of plastic.

A distance that is on the optical axis and that is from the object-side surface S1 of the first lens L1 to an imaging plane S15 corresponding to an infinite object distance is TTL, an effective focal length of the optical lens assembly is f, and the following condition can be met: $TTL/f \leq 0.96$. A relatively short TTL is implemented, thereby facilitating miniaturization design of the optical lens assembly, saving internal space of a terminal device, and facilitating thinning development of the terminal device.

In Embodiment 1, a dispersion coefficient (an Abbe number) of the third lens L3 is V3, and V3 meets the following condition: $15 \leq V3 \leq 100$. A chromatic aberration of the lens assembly can be corrected through proper allocation of a focal power and selection of a dispersion coefficient.

In Embodiment 1, when temperature is changed by $\Delta$°C, a change amount of the focal length f is $\Delta f$. $\Delta f/\Delta$°C is defined as a temperature drift coefficient of the lens assembly, and the temperature drift coefficient meets the following condition: $-1\ \mu m/°C \leq \Delta f/\Delta °C \leq 1\ \mu m/°C$, so that a temperature drift effect of a photographing system can be relieved.

A coefficient $\beta$ of a relative refractive index to a temperature drift is defined as (dn/dt)rel (n is a refractive index, and T is temperature), and indicates a temperature-dependent change coefficient of a refractive index of a material in a medium such as air. A coefficient $\beta 3$ of a relative refractive index to a temperature drift of the third lens L3 in Embodiment 1 meets the following condition: $-9\times10^{-5} \leq \beta 3 \leq 9\times10^{-5}$. A focal length of the third lens L3 is f3, the effective focal length of the optical lens assembly is f, and $f3/f = 0.40$, which meets the following condition: $0 \leq f3/f \leq 3$. A relatively small system temperature drift coefficient can be obtained by using a material with a small coefficient of a relative refractive index to a temperature drift and through allocation of a focal power.

A spacing between adjacent lenses is a distance between adjacent optical surfaces in a direction along the optical axis.

In Embodiment 1, a spacing between the fourth lens L4 and the fifth lens L5 is SP4 (that is, a distance between the image-side surface S8 of the fourth lens L4 and the object-side surface S9 of the fifth lens L5 in the direction along the optical axis), a spacing between an object-side vertex position of the first lens L1 and an image-side vertex position of the sixth lens L6 is LT, and $SP4/LT \leq 0.5$, thereby helping reduce implementation difficulty of lens assembly. Specifically, when a spacing between lenses is large, assembly precision is not easy to ensure, and assembly difficulty is relatively large, thereby affecting a yield rate of the optical lens. In this implementation, it is ensured that the ratio of the spacing SP2 between the fourth lens L4 and the fifth lens L5 to LT is less than or equal to 0.5, so that the spacing between the fourth lens L4 and the fifth lens L5 is within a proper range, assembly difficulty is reduced, and the yield rate is increased.

In this application, the object-side vertex of the lens is a position of an object-side surface of the lens on the optical axis, and the image-side vertex position is a position of an image-side surface of the lens on the optical axis. The same explanation is also used in other embodiments.

As an extension of Embodiment 1, there may be a vignetting stop ST1 (which is not shown in the figure) in front of (that is, on an object side of) the first lens L1, and a vignetting stop ST2 (which is not shown in the figure) at rear of (that is, on an image side of) the fifth lens L5, so that a diameter of the lens assembly can be effectively reduced.

In Embodiment 1, the effective focal length of the optical lens assembly is f, a curvature radius of the object-side surface of the second lens L2 is R21, a curvature radius of the image-side surface of the second lens L2 is R22, and the following condition is met: |f/R21| + |f/R22| = 3.78, thereby helping correct a system aberration, so that a longitudinal chromatic aberration of the optical lens assembly is less than 1.5 μm, an axial chromatic aberration of the optical lens assembly is less than 10 μm, and distortion of the optical lens assembly is less than 1%.

Table 1a is a table of characteristics of an optical system according to this embodiment, and both a curvature radius and a thickness are measured in millimeters (mm).

**Table 1a**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| VIG STO | Vignetting stop | Aspherical surface | Infinite | -0.860 | | | |
| S1 | First lens | Aspherical surface | 3.0100 | 2.100 | Plastic | 1.544 | 56 |
| S2 | | Aspherical surface | 6.4722 | 0.480 | | | |
| S3 | Second lens | Aspherical surface | 17.9712 | 0.360 | Plastic | 1.65 | 20.4 |
| S4 | | Aspherical surface | 4.8489 | 0.374 | | | |
| S5 | Third lens | Spherical surface | 5.5238 | 0.988 | Glass | 1.49 | 70.4 |
| S6 | | Spherical surface | -5.5238 | -0.092 | | | |
| STO | Aperture stop | Planar surface | Infinitely large | 0.492 | | | |
| S7 | Fourth lens | Aspherical surface | -4.9584 | 0.400 | Plastic | 1.65 | 20.4 |
| S8 | | Aspherical surface | 9.7358 | 0.667 | | | |
| S9 | Fifth lens | Aspherical surface | -30.7958 | 0.905 | Plastic | 1.65 | 20.4 |
| S10 | | Aspherical surface | -2.6118 | 0.083 | | | |
| S11 | Sixth lens | Aspherical surface | -2.5015 | 0.360 | Plastic | 1.544 | 56 |
| S12 | | Aspherical surface | 780.4371 | 0.373 | | | |
| S13 | Infrared filter | Planar surface | | 0.210 | Glass | 1.52 | 64.2 |
| S14 | | Planar surface | Infinite | 5.000 | | | |
| S15 | | Planar surface | Infinite | | | | |

Table 1b shows higher order term coefficients A4, A6, A8, and A10 that can be used for the aspherical surfaces S1 to S12 in Embodiment 1.

**Table 1b**

| Surface number | K | A4 | A6 | A8 | A10 |
|---|---|---|---|---|---|
| S1 | 4.531E-01 | -1.486E-03 | -1.893E-04 | 4.767E-07 | -6.491E-06 |
| S2 | 1.2452E+01 | 2.086E-03 | -2.181E-03 | -3.017E-04 | -1.303E-04 |
| S3 | -9.900E+01 | -1.792E-02 | -8.679E-03 | -9.676E-05 | 5.096E-04 |
| S4 | -2.648E+01 | -1.461E-04 | -2.207E-02 | 6.717E-03 | -6.057E-04 |
| S7 | 7.882E+00 | 1.599E-02 | 3.855E-03 | -3.538E-03 | 1.057E-03 |
| S8 | 0 | 2.477E-02 | 1.529E-02 | -1.935E-03 | 0 |
| S9 | -9.900E+01 | -1.295E-02 | 3.351E-03 | 1.865E-03 | -3.532E-03 |
| S10 | 1.187E+00 | 9.182E-04 | -3.248E-03 | 9.240E-03 | -3.430E-03 |
| S11 | -8.169E-01 | -4.560E-03 | 7.245E-04 | 1.001E-02 | -2.065E-03 |
| S12 | -9.900E+01 | -7.326E-03 | 4.417E-03 | 0 | 0 |

Table 1c shows the distance TTL that is on the optical axis and that is from the object-side surface S1 of the first lens L1 of the optical system in this embodiment to the imaging plane S15 corresponding to the infinite object distance, a maximum image height ImgH of the optical lens assembly, the effective focal length f of the optical lens assembly, a focal length f1 of the first lens, a focal length f2 of the second lens, the focal length f3 of the third lens, a focal length f4 of the fourth lens, a focal length f5 of the fifth lens, and a focal length f6 of the sixth lens.

**Table 1c**

| Parameter | TTL | ImgH | f | f1 | f2 | f3 | f4 | f5 | f6 |
|---|---|---|---|---|---|---|---|---|---|
| Value (mm) | 12.7 | 2.5 | 14.46 | 8.49 | -10.41 | 5.82 | -5.04 | 4.37 | -4.57 |

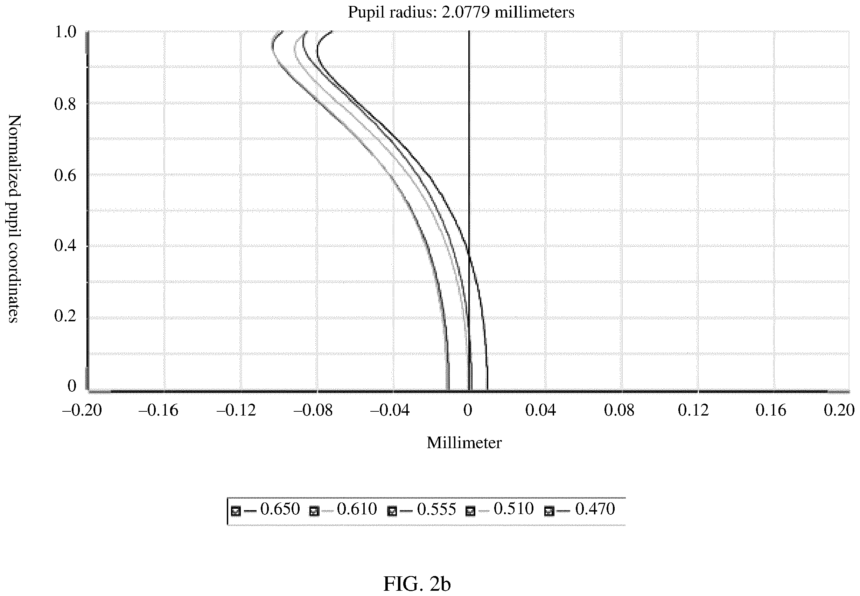

FIG. 2b shows an axial spherical aberration curve of the optical system of Embodiment 1. A horizontal axis indicates a focusing position on the optical axis, and a vertical axis indicates a field of view. The curve indicates axial focusing positions of five rays of light with different wavelengths at different fields of view.

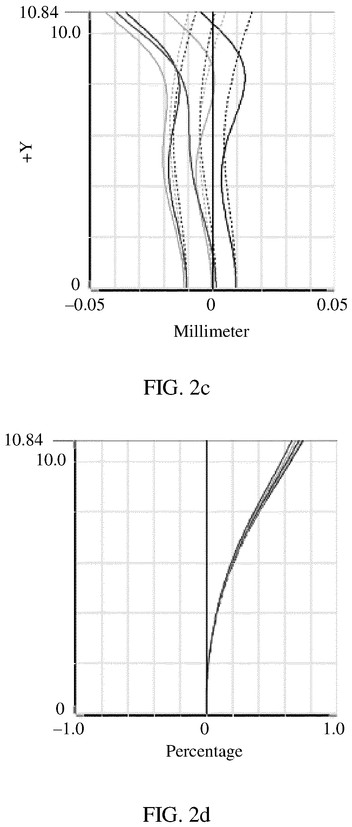

FIG. 2c shows an astigmatic field curve of the optical system of Embodiment 1. The curve indicates a meridian field curvature and a sagittal field curvature. A solid line with a larger curvature indicates the meridian field curvature. A dashed line with a smaller curvature indicates the sagittal field curvature.

FIG. 2d shows a distortion curve of the optical system of Embodiment 1. The curve indicates distortion values corresponding to different fields of view.

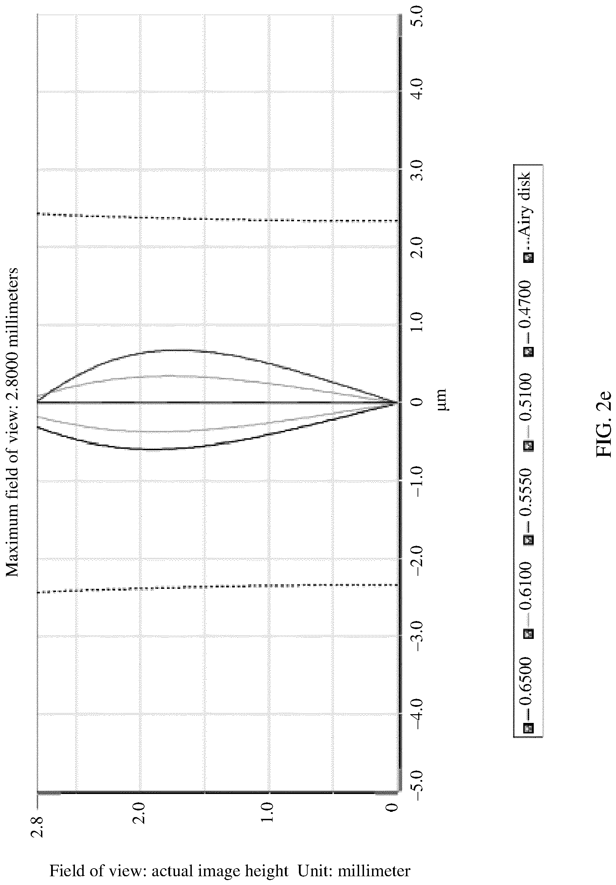

FIG. 2e shows a longitudinal chromatic aberration curve of the optical system of Embodiment 1. A horizontal axis indicates an image height change, and a vertical axis indicates a field of view. The curve indicates longitudinal chromatic aberrations corresponding to five rays of light with different wavelengths at different fields of view.

It can be learned from FIG. 2b to FIG. 2e that the optical system provided in Embodiment 1 can implement good imaging quality.

**Embodiment 2**

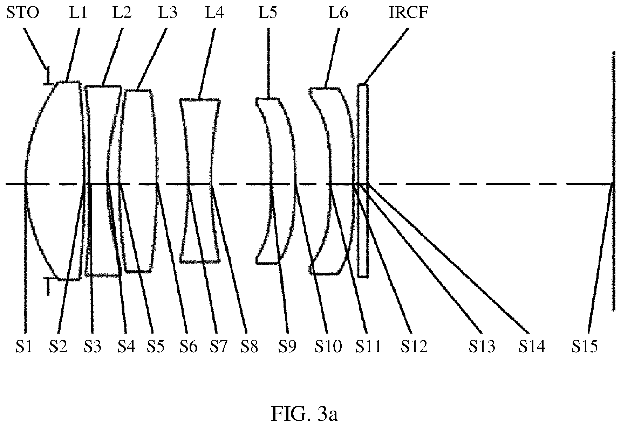

As shown in FIG. 3a, in an optical lens assembly provided in this implementation, from an object side to an image side along an optical axis, there are a vignetting stop ST1, a first lens L1, a second lens L2, a third lens L3, an aperture stop STO, a fourth lens L4, a fifth lens L5, and a sixth lens L6. An infrared filter element IRCF and an electronic photosensitive element may be placed on an imaging plane.

The first lens L1 has a positive focal power and is made of a resin material. An object-side surface S1 of the first lens L1 near the optical axis is a convex surface. An image-side surface S2 of the first lens L1 near the optical axis is a concave surface. Both the object-side surface S1 and the image-side surface S2 are aspherical surfaces.

The second lens L2 has a negative focal power and is made of a resin material. An object-side surface S3 of the second lens L2 near the optical axis is a convex surface. An image-side surface S4 of the second lens L2 near the optical axis is a concave surface. Both the object-side surface S3 and the image-side surface S4 are aspherical surfaces.

The third lens L3 has a positive focal power and is made of a glass material. An object-side surface S5 of the third lens L3 near the optical axis is a convex surface. An image-side surface S6 of the third lens L3 near the optical axis is a concave surface. Both the object-side surface S5 and the image-side surface S6 are spherical surfaces.

The fourth lens L4 has a negative focal power and is made of a resin material. An object-side surface S7 of the fourth lens L4 near the optical axis is a concave surface. An image-side surface S8 of the fourth lens L4 near the optical axis is a concave surface. Both the object-side surface S7 and the image-side surface S8 are aspherical surfaces.

The fifth lens L5 has a positive focal power and is made of a resin material. An object-side surface S9 of the fifth lens L5 near the optical axis is a concave surface. An image-side surface S10 of the fifth lens L5 near the optical axis is a convex surface. Both the object-side surface S9 and the image-side surface S10 are aspherical surfaces.

The sixth lens L6 has a negative focal power and is made of a resin material. An object-side surface S11 of the sixth lens L6 near the optical axis is a concave surface. An image-side surface S12 of the sixth lens L6 near the optical axis is a concave surface. Both the object-side surface S11 and the image-side surface S12 are aspherical surfaces.

A distance that is on the optical axis and that is from the object-side surface S1 of the first lens L1 to an imaging plane S15 corresponding to an infinite object distance is TTL, an effective focal length of the optical lens assembly is f, and the following condition can be met: $TTL/f \leq 0.96$. A relatively short TTL is implemented, thereby facilitating miniaturization design of the optical lens assembly, saving internal space of a terminal device, and facilitating thinning development of the terminal device.

In Embodiment 2, a dispersion coefficient (an Abbe number) of the third lens L3 is V3, and V3 meets the following condition: $15 \leq V3 \leq 100$. A chromatic aberration of the lens assembly can be corrected through proper allocation of a focal power and selection of a dispersion coefficient.

In Embodiment 2, when temperature is changed by $\Delta$°C, a change amount of the focal length f is $\Delta f$. $\Delta f/\Delta$°C is defined as a temperature drift coefficient of the lens assembly, and the temperature drift coefficient meets the following condition: $-1\ \mu m/°C \leq \Delta f/\Delta °C \leq 1\ \mu m/°C$, so that a temperature drift effect of a photographing system can be relieved.

A coefficient $\beta$ of a relative refractive index to a temperature drift is defined as (dn/dt)rel, and indicates a temperature-dependent change coefficient of a refractive index of a material in a medium such as air. A coefficient $\beta 3$ of a relative refractive index to a temperature drift of the third lens L3 meets the following condition: $-9\times10^{-5} \leq \beta 3 \leq 9\times10^{-5}$. A focal length of the third lens L3 is f3, the effective focal length of the lens assembly is f, and f3/f = 0.39, which meets the following condition: $0 < f3/f \leq 3$. A relatively small system temperature drift coefficient can be obtained by using a material with a small coefficient of a relative refractive index to a temperature drift and through allocation of a focal power.

In Embodiment 2, a spacing between the fourth lens L4 and the fifth lens L5 is SP4, a spacing between an object-side vertex position of the first lens L1 and an image-side vertex position of the sixth lens L6 is LT, and $SP4/LT \leq 0.5$, thereby helping reduce implementation difficulty of lens assembly.

As an extension of Embodiment 1, there may be a vignetting stop ST1 (which is not shown in the figure) in front of (that is, on an object side of) the first lens L1, and a vignetting stop ST2 (which is not shown in the figure) at rear of (that is, on an image side of) the fifth lens L5, so that a diameter of the lens assembly can be effectively reduced.

In Embodiment 2, the effective focal length of the optical lens assembly is f, a curvature radius of the object-side surface of the second lens L2 is R21, a curvature radius of the image-side surface of the second lens L2 is R22, and the following condition is met: $|f/R21| + |f/R22| = 8.6$, thereby helping correct a system aberration, so that a longitudinal chromatic aberration of the optical lens assembly is less than 1.5 $\mu$m, an axial chromatic aberration of the optical lens assembly is less than 10 $\mu$m, and distortion of the optical lens assembly is less than 1%.

Table 2a is a table of characteristics of an optical system according to this embodiment, and both a curvature radius and a thickness are measured in millimeters (mm).

**Table 2a**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| VIG STO | Vignetting stop | Aspherical surface | Infinite | -0.773 | | | |
| S1 | First lens | Aspherical surface | 3.3580 | 2.100 | Plastic | 1.544 | 56 |

(continued)

| Surface number | Description | Surface type | Curvature radius | Thickness | Material | Refractive index | Dispersion coefficient |
|---|---|---|---|---|---|---|---|
| S2 | | Aspherical surface | 4.8218 | 0.225 | | | |
| S3 | Second lens | Aspherical surface | 4.6570 | 0.360 | Plastic | 1.65 | 22.4 |
| S4 | | Aspherical surface | 2.6314 | 0.370 | | | |
| S5 | Third lens | Spherical surface | 2.2982 | 1.157 | Glass | 1.49 | 70.4 |
| S6 | | Spherical surface | 12.1668 | 0.707 | | | |
| STO | Aperture stop | Planar surface | Infinitely large | 0.119 | | | |
| S7 | Fourth lens | Aspherical surface | -7.4242 | 0.400 | Plastic | 1.65 | 22.4 |
| S8 | | Aspherical surface | 14.1861 | 0.453 | | | |
| S9 | Fifth lens | Aspherical surface | -27.8432 | 0.782 | Plastic | 1.67 | 20.4 |
| S10 | | Aspherical surface | -3.7492 | 0.104 | | | |
| S11 | Sixth lens | Aspherical surface | -3.9463 | 0.360 | Plastic | 1.544 | 56 |
| S12 | | Aspherical surface | 30.6675 | 0.353 | | | |
| S13 | Infrared filter | Planar surface | | 0.210 | Glass | 1.52 | 64.2 |
| S14 | | Planar surface | Infinite | 5.000 | | | |
| S15 | | Planar surface | Infinite | | | | |

Table 2b shows higher order term coefficients A4, A6, A8, and A10 that can be used for the aspherical surfaces S1 to S12 in Embodiment 2.

**Table 2b**

| Surface number | K | A4 | A6 | A8 | A10 |
|---|---|---|---|---|---|
| S1 | 2.769E-01 | -9.860E-04 | -1.497E-04 | -8.492E-06 | -3.102E-06 |
| S2 | 4.350E+00 | 4. 266E-03 | -3.149E-03 | 2.320E-04 | -9.858E-05 |
| S3 | 2.694E+00 | -1.851E-02 | -2.341E-03 | 3.658E-04 | -7.524E-05 |
| S4 | -3.955E+00 | -3.858E-03 | -4.622E-03 | 9.610E-04 | -1.423E-04 |
| S7 | -1.198E+01 | 2.024E-02 | -3.226E-02 | 1.771E-03 | 1.613E-03 |
| S8 | 0 | 9.374E-02 | -2.672E-02 | 3.463E-03 | 0 |
| S9 | -6.024E+01 | 5.249E-02 | -1.466E-02 | 1.182E-02 | -5.389E-03 |

(continued)

| Surface number | K | A4 | A6 | A8 | A10 |
|---|---|---|---|---|---|
| S10 | -9.667E+00 | 2.070E-02 | -3.383E-02 | 2.227E-02 | -3.202E-03 |
| S11 | 4.406E+00 | 2.987E-02 | -3.650E-02 | 2.938E-02 | -5.521E-03 |
| S12 | -9.407E+01 | -2.365E-02 | 6.634E-03 | 0 | 0 |

Table 2c shows the distance TTL that is on the optical axis and that is from the object-side surface S1 of the first lens L1 of the optical system in this embodiment to the imaging plane S15 corresponding to the infinite object distance, a maximum image height ImgH of the optical lens assembly, the effective focal length f of the optical lens assembly, a focal length f1 of the first lens, a focal length f2 of the second lens, the focal length f3 of the third lens, a focal length f4 of the fourth lens, a focal length f5 of the fifth lens, and a focal length f6 of the sixth lens.

**Table 2c**

| Parameter | TTL | ImgH | f | f1 | f2 | f3 | f4 | f5 | f6 |
|---|---|---|---|---|---|---|---|---|---|
| Value (mm) | 12.7 | 2.5 | 14.46 | 13.43 | -10.09 | 5.58 | -7.51 | 6.41 | -6.38 |

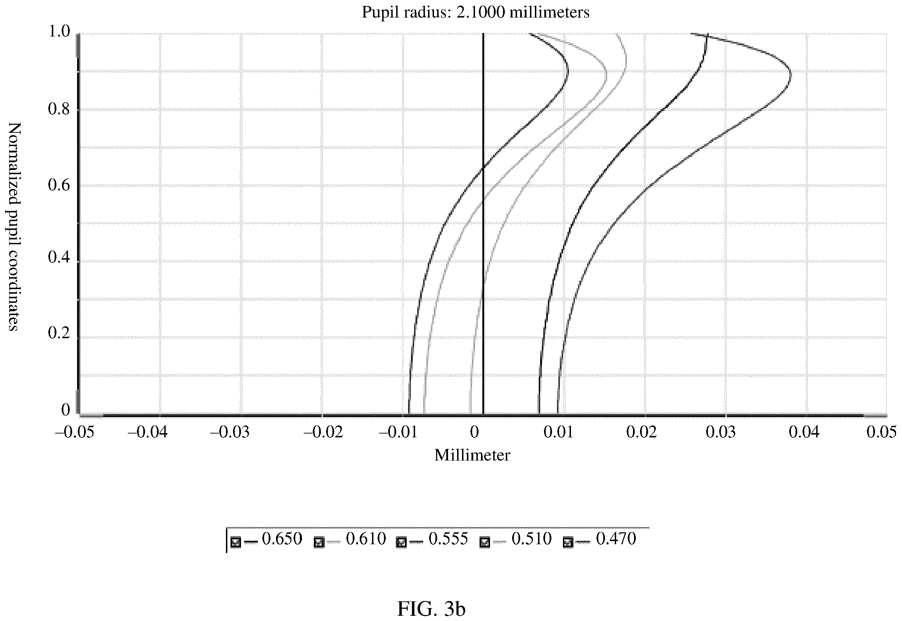

FIG. 3b shows an axial spherical aberration curve of the optical system of Embodiment 2. A horizontal axis indicates a focusing position on the optical axis, and a vertical axis indicates a field of view. The curve indicates axial focusing positions of five rays of light with different wavelengths at different fields of view.

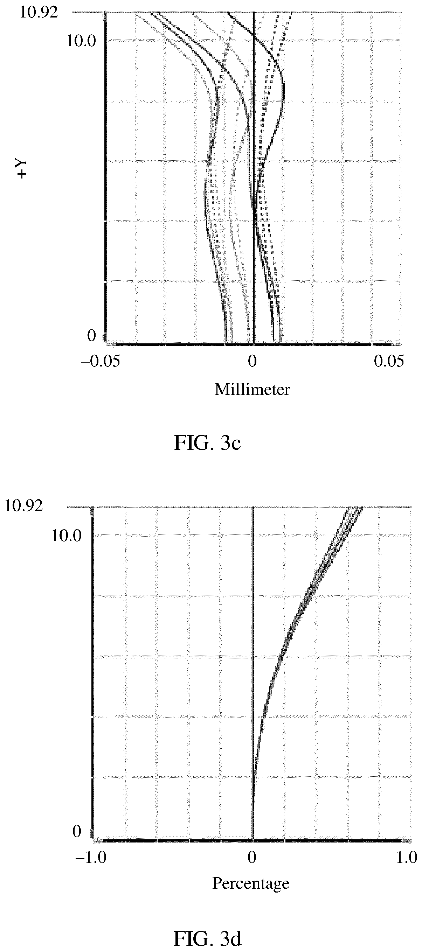

FIG. 3c shows an astigmatic field curve of the optical system of Embodiment 2. The curve indicates a meridian field curvature and a sagittal field curvature. A solid line with a larger curvature indicates the meridian field curvature. A dashed line with a smaller curvature indicates the sagittal field curvature.

FIG. 3d shows a distortion curve of the optical system of Embodiment 2. The curve indicates distortion values corresponding to different fields of view.

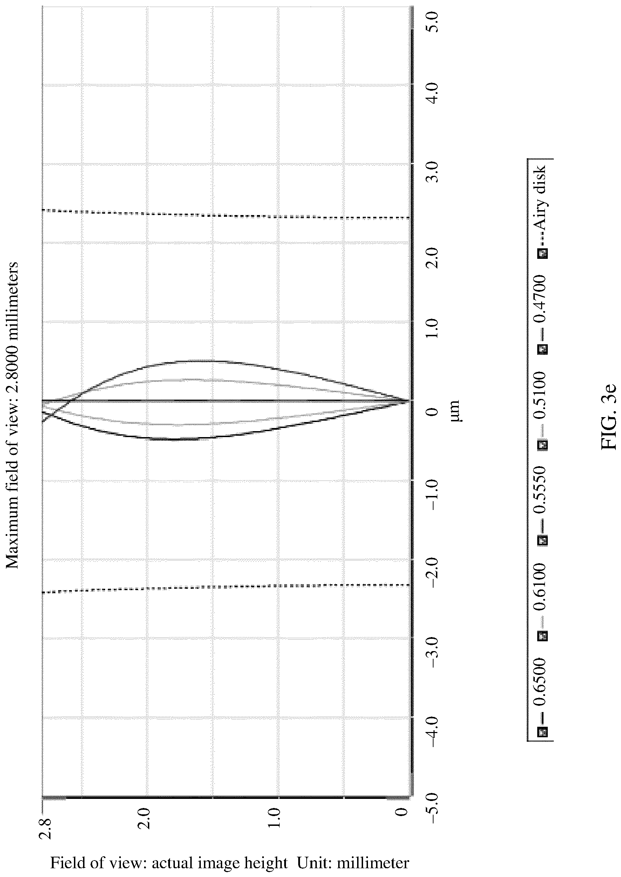

FIG. 3e shows a longitudinal chromatic aberration curve of the optical system of Embodiment 2. A horizontal axis indicates an image height change, and a vertical axis indicates a field of view. The curve indicates longitudinal chromatic aberrations corresponding to five rays of light with different wavelengths at different fields of view.

It can be learned from FIG. 3b to FIG. 3e that the optical system provided in Embodiment 2 can implement good imaging quality.

**Embodiment 3**

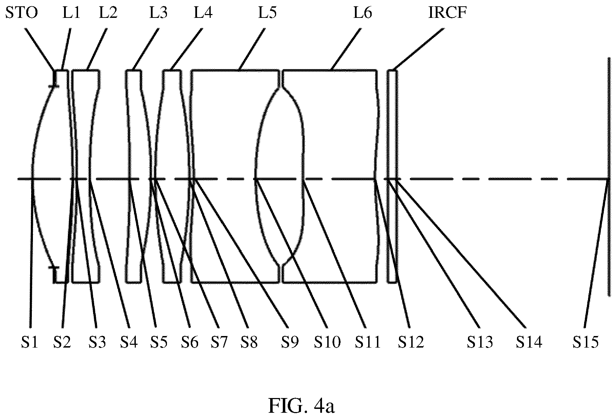

As shown in FIG. 4a, in an optical lens assembly provided in this implementation, from an object side to an image side along an optical axis, there are an aperture stop STO, a first lens L1, a second lens L2, a third lens L3, a fourth lens L4, a fifth lens L5, and a sixth lens L6. An infrared filter element IRCF and an electronic photosensitive element may be placed on an imaging plane.

The first lens L1 has a positive focal power and is made of a resin material. An object-side surface S1 of the first lens L1 near the optical axis is a convex surface. An image-side surface S2 of the first lens L1 near the optical axis is a convex surface. Both the object-side surface S1 and the image-side surface S2 are aspherical surfaces.

The second lens L2 has a negative focal power and is made of a resin material. An object-side surface S3 of the second lens L2 near the optical axis is a concave surface. An image-side surface S4 of the second lens L2 near the optical axis is a concave surface. Both the object-side surface S3 and the image-side surface S4 are aspherical surfaces.

The third lens L3 has a positive focal power and is made of a resin material. An object-side surface S5 of the third lens L3 near the optical axis is a convex surface. An image-side surface S6 of the third lens L3 near the optical axis is a convex surface. Both the object-side surface S5 and the image-side surface S6 are spherical surfaces.

The fourth lens L4 has a positive focal power and is made of a glass material. An object-side surface S7 of the fourth lens L4 near the optical axis is a concave surface. An image-side surface S8 of the fourth lens L4 near the optical axis is a concave surface. Both the object-side surface S7 and the image-side surface S8 are spherical surfaces.

The fifth lens L5 has a negative focal power and is made of a resin material. An object-side surface S9 of the fifth lens L5 near the optical axis is a concave surface. An image-side surface S10 of the fifth lens L5 near the optical axis is a convex surface. Both the object-side surface S9 and the image-side surface S10 are aspherical surfaces.

The sixth lens L6 has a negative focal power and is made of a resin material. An object-side surface S11 of the sixth lens L6 near the optical axis is a concave surface. An image-side surface S12 of the sixth lens L6 near the optical axis is a convex surface. Both the object-side surface S11 and the image-side surface S12 are aspherical surfaces.

A distance that is on the optical axis and that is from the object-side surface S1 of the first lens L1 to an imaging plane S15 corresponding to an infinite object distance is TTL, an effective focal length of the optical lens assembly is f, and the following condition can be met: $TTL/f \leq 0.94$. A relatively short TTL is implemented, thereby facilitating miniaturization design of the optical lens assembly, saving internal space of a terminal device, and facilitating thinning development of the terminal device.

In Embodiment 3, a dispersion coefficient (an Abbe number) of the fourth lens L4 is V4, and V4 meets the following condition: $15 \leq V4 \leq 100$. A chromatic aberration of the lens assembly can be corrected through proper allocation of a focal power and selection of a dispersion coefficient.

In Embodiment 3, when temperature is changed by $\Delta$°C, a change amount of f is $\Delta f$.$\Delta f/\Delta$°C is defined as a temperature drift coefficient of the lens assembly, and the temperature drift coefficient meets the following condition: $-1\ \mu m/°C \leq \Delta f/\Delta °C \leq 1\ \mu m/°C$, so that a temperature drift effect of a photographing system can be relieved.

A coefficient $\beta$ of a relative refractive index to a temperature drift is defined as (dn/dt)rel, and indicates a temperature-dependent change coefficient of a refractive index of a material in a medium such as air. A coefficient $\beta 4$ of a relative refractive index to a temperature drift of the fourth lens L4 in Embodiment 3 meets the following condition: $-9\times10^{-5} \leq \beta 4 \leq 9\times10^{-5}$. A focal length of the fourth lens is f4, the effective focal length of the optical lens assembly is f, and $f4/f = 0.75$, which meets the following condition: $0.1 \leq f4/f \leq 3$. A temperature drift coefficient of the lens assembly is reduced by using a material with a small coefficient of a relative refractive index to a temperature drift and through proper allocation of a focal power.

In Embodiment 3, a spacing between the fifth lens L5 and the sixth lens L6 is SP5, a spacing between an object-side vertex position of the first lens L1 and an image-side vertex position of the sixth lens L6 is LT, and $SP5/LT \leq 0.2$, thereby helping reduce implementation difficulty of lens assembly.

In Embodiment 3, the effective focal length of the optical lens assembly is f, a curvature radius of the object-side surface of the second lens L2 is R21, a curvature radius of the image-side surface of the second lens L2 is R22, and the following condition is met: $|f/R21| + |f/R22| = 1.99$, thereby helping correct a system aberration, so that a longitudinal chromatic aberration of the optical lens assembly is less than 1.5 μm, an axial chromatic aberration of the optical lens assembly is less than 10 μm, and distortion of the optical lens assembly is less than 1%.

With reference to the foregoing specific embodiment, in the optical lens assembly provided in this application, a focal power, a material, and a surface shape (a concave surface or a convex surface) of each lens are limited; and a dispersion coefficient, a temperature drift coefficient, and a coefficient of a relative refractive index to a temperature drift of the lens, a spacing between adjacent lenses, and a range of a curvature radius of each surface are limited. This not only resolves a temperature drift effect, but also improves an imaging effect. In addition, this helps correct a comprehensive aberration of the optical lens assembly. Therefore, in the optical lens assembly provided in this application, a longitudinal chromatic aberration is less than 1.5 μm, an axial chromatic aberration is less than 10 μm, and distortion is less than 1%.

Table 3a is a table of characteristics of an optical system according to this embodiment, and both a curvature radius and a thickness are measured in millimeters (mm).

**Table 3a**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| STO | Aperture stop | Planar surface | Infinite | -0.5 | | | |
| S1 | First lens | Aspherical surface | 4.599 | 0.947 | Plastic | 1.5445 | 55.987 |
| S2 | | Aspherical surface | -16.109 | 0.100 | | | |
| S3 | Second lens | Aspherical surface | -15.907 | 0.300 | Plastic | 1.651 | 21.518 |
| S4 | | Aspherical surface | 13.477 | 0.943 | | | |
| S5 | Third lens | Spherical surface | -27.868 | 0.501 | Plastic | 1.651 | 21.518 |

(continued)

| Surface number | Description | Surface type | Curvature radius | Thickness | Material | Refractive index | Dispersion coefficient |
|---|---|---|---|---|---|---|---|
| S6 | | Spherical surface | -9.189 | 0.100 | | | |
| S7 | Fourth lens | Spherical surface | 11.498 | 0.801 | Glass | 1.5168 | 64.167 |
| S8 | | Spherical surface | -10.749 | 0.102 | | | |
| S9 | Fifth lens | Aspherical surface | -9.252 | 1.456 | Plastic | 1.5445 | 55.987 |
| S10 | | Aspherical surface | 5.896 | 1.112 | | | |
| S11 | Sixth lens | Aspherical surface | 16.083 | 1.698 | Plastic | 1.5445 | 55.987 |
| S12 | | Aspherical surface | 6.636 | 0.300 | | | |
| S13 | Infrared filter | Planar surface | Infinite | 0.21 | Glass | 1.52 | 64.2 |
| S14 | | Planar surface | Infinite | 5.00 | | | |
| S15 | | Planar surface | Infinite | | | | |

Table 3b shows higher order term coefficients A4 and A6 that can be used for the aspherical surfaces S1 to S12 in Embodiment 3.

**Table 3b**

| Surface number | K | A4 | A6 |
|---|---|---|---|
| S1 | 1.924E-010 | -1.491E-003 | 1.306E-004 |
| S2 | 3.377E-011 | 3.070E-004 | 2.890E-004 |
| S3 | 4.193E-011 | 1.349E-004 | 2.514E-004 |
| S4 | 8.395E-011 | 8.726E-005 | 4.237E-004 |
| S5 | 0 | 0 | 0 |
| S6 | 0 | 0 | 0 |
| S7 | 0 | 0 | 0 |
| S8 | 0 | 0 | 0 |
| S9 | 1.321E-010 | 8.912E-003 | 3.154E-004 |
| S10 | 1.740E-010 | 1.651E-004 | 8.713E-004 |
| S11 | -3.420E-010 | -2.463E-002 | -1.490E-003 |
| S12 | -3.664E-010 | -2.039E-002 | 1.028E-003 |

Table 3c shows the distance TTL that is on the optical axis and that is from the object-side surface S1 of the first lens L1 of the optical system in this embodiment to the imaging plane S15 corresponding to the infinite object distance, a maximum image height ImgH of the optical lens assembly, the effective focal length f of the optical lens assembly, a focal length f1 of the first lens, a focal length f2 of the second lens, the focal length f3 of the third lens, a focal length f4 of the fourth lens, a focal length f5 of the fifth lens, and a focal length f6 of the sixth lens.

**Table 3c**

| Parameter | TTL | ImgH | f | f1 | f2 | f3 | f4 | f5 | f6 |
|---|---|---|---|---|---|---|---|---|---|
| Value (mm) | 13.57 | 2.8 | 14.50 | 6.66 | -11.07 | 20.67 | 10.85 | -6.38 | -22.08 |

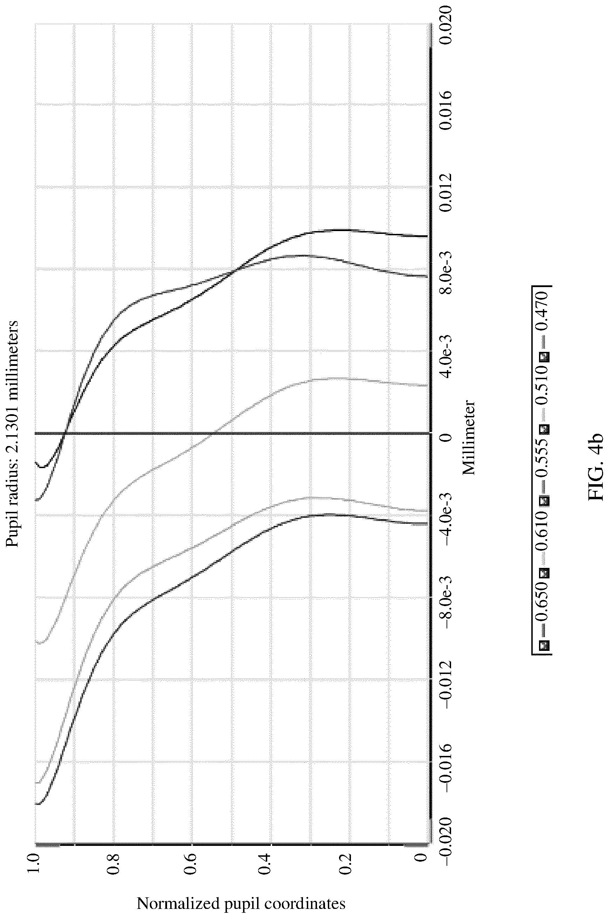

FIG. 4b shows an axial spherical aberration curve of the optical system of Embodiment 3. A horizontal axis indicates a focusing position on the optical axis, and a vertical axis indicates a field of view. The curve indicates axial focusing positions of five rays of light with different wavelengths at different fields of view.

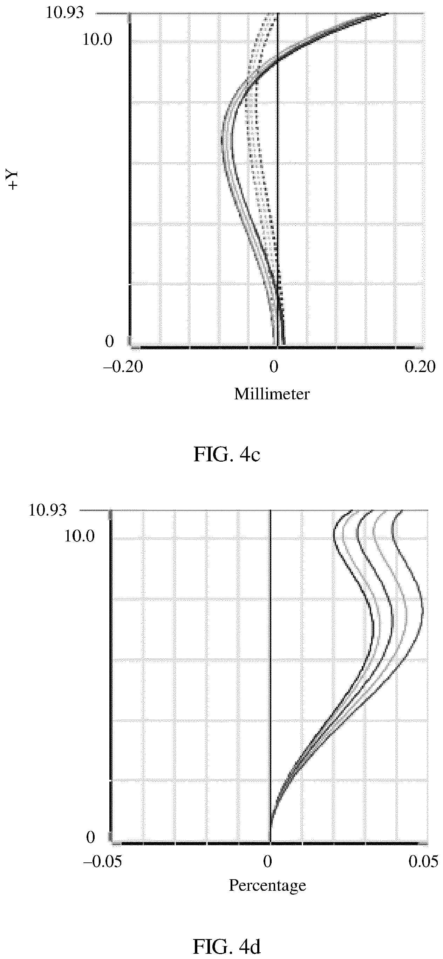

FIG. 4c shows an astigmatic field curve of the optical system of Embodiment 3. The curve indicates a meridian field curvature and a sagittal field curvature. A solid line with a larger curvature indicates the meridian field curvature. A dashed line with a smaller curvature indicates the sagittal field curvature.

FIG. 4d shows a distortion curve of the optical system of Embodiment 3. The curve indicates distortion values corresponding to different fields of view.

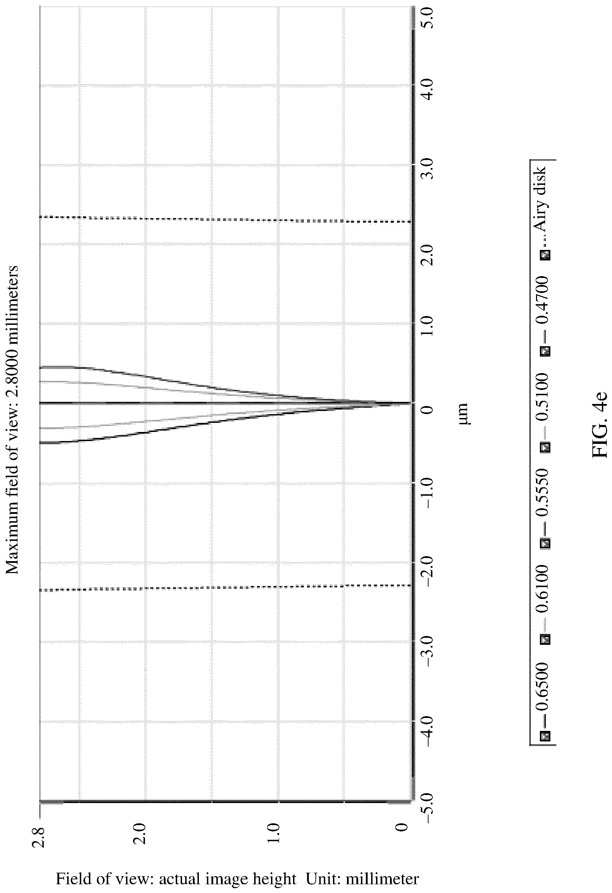

FIG. 4e shows a longitudinal chromatic aberration curve of the optical system of Embodiment 3. A horizontal axis indicates an image height change, and a vertical axis indicates a field of view. The curve indicates longitudinal chromatic aberrations corresponding to five rays of light with different wavelengths at different fields of view.

It can be learned from FIG. 4b to FIG. 4e that the optical system provided in Embodiment 3 can implement good imaging quality.

With reference to the foregoing specific embodiment, in the optical lens assembly provided in this application, a focal power, a material, and a surface shape (a concave surface or a convex surface) of each lens are limited; and a dispersion coefficient, a temperature drift coefficient, and a coefficient of a relative refractive index to a temperature drift of the lens, a spacing between adjacent lenses, and a range of a curvature radius of each surface are limited. This not only resolves a temperature drift effect, but also improves an imaging effect. In addition, this helps correct a comprehensive aberration of the optical lens assembly. Therefore, in the optical lens assembly provided in this application, a longitudinal chromatic aberration is less than 1.5 $\mu$m, an axial chromatic aberration is less than 10 $\mu$m, and distortion is less than 1%.

In this application, the first material whose coefficient of a relative refractive index to a temperature drift is less than that of the plastic material is selected as a material of the at least one lens in the optical lens assembly, so that an optical effect of the optical lens assembly can be suppressed, and parameters such as a focal length and an MTF (Modulation Transfer Function (modulation transfer function)) of the optical lens assembly are insensitive to temperature. This helps reduce a stroke margin used by a voice coil motor to compensate for a temperature drift effect of the lens assembly, or cancel a temperature drift effect compensation algorithm of a photographing system, thereby improving user experience and achieving excellent optical quality.

## Claims

1. An optical lens assembly, comprising a plurality of lenses successively arranged from an object side to an image side in a direction along an optical axis, wherein at least one of the plurality of lenses is made of a first material, a coefficient of a relative refractive index to a temperature drift of the first material is less than that of a plastic material, the first three of the plurality of lenses in a direction from the object side to the image side are successively a first lens, a second lens, and a third lens, the first lens has a positive focal power, the second lens has a negative focal power, the third lens has a positive focal power, an effective focal length of the optical lens assembly is f, a distance from an object-side surface of the first lens to an imaging plane on the optical axis is TTL, and $TTL/f \leq 0.96$.

2. The optical lens assembly according to claim 1, wherein the coefficient of the relative refractive index to the temperature drift of the first material is $\beta$, and $-9\times10^{-5} \leq \beta \leq 9\times10^{-5}$.

3. The optical lens assembly according to claim 2, wherein the coefficient of the relative refractive index to the temperature drift of the first material is $\beta$, and $-9\times10^{-5} \leq \beta \leq 0$.

4. The optical lens assembly according to claim 3, wherein the first material is a glass material.

5. The optical lens assembly according to claim 2, wherein a temperature drift coefficient of the optical lens assembly is $\Delta f/\Delta °C$, and $-2.6\ \mu m/°C \leq \Delta f/\Delta °C \leq 2.6\ \mu m/°C$.

6. The optical lens assembly according to claim 5, wherein -1 μm/°C ≤ Δf/Δ°C ≤ 1 μm/°C.

7. The optical lens assembly according to claim 1, wherein a curvature radius of an object-side surface of the second lens is R21, a curvature radius of an image-side surface of the second lens is R22, and |f/R21| + |f/R22| < 10.

8. The optical lens assembly according to claim 1, wherein the plurality of lenses are six lenses: the first lens, the second lens, the third lens, a fourth lens, a fifth lens, and a sixth lens that are successively arranged from the object side to the image side, the optical lens assembly further comprises a vignetting stop, and the vignetting stop is disposed on an object side of the first lens and/or disposed on an image side of the sixth lens.

9. The optical lens assembly according to claim 1, wherein a dispersion coefficient of the lens made of the first material is V, and 15 ≤ V ≤ 100.

10. The optical lens assembly according to claim 1, wherein the third lens is made of the first material, and at least one surface of the third lens is a spherical surface.

11. The optical lens assembly according to claim 10, wherein a spherical radius of the spherical surface of the third lens is R, and -100 mm < R < 100 mm.

12. The optical lens assembly according to claim 10, wherein a focal length of the third lens is f3, and the following condition is met: 0.1 ≤ f3/f ≤ 3.

13. The optical lens assembly according to claim 10, wherein the plurality of lenses are six lenses: the first lens, the second lens, the third lens, a fourth lens, a fifth lens, and a sixth lens that are successively arranged from the object side to the image side, a spacing between the fourth lens and the fifth lens is SP4, a spacing between an object-side vertex position of the first lens and an image-side vertex position of the sixth lens is LT, and SP42/LT ≤ 0.5.

14. The optical lens assembly according to claim 1, wherein the plurality of lenses are six lenses: the first lens, the second lens, the third lens, a fourth lens, a fifth lens, and a sixth lens that are successively arranged from the object side to the image side, the fourth lens is made of the first material, and at least one surface of the fourth lens is a spherical surface.

15. The optical lens assembly according to claim 14, wherein a spherical radius of the spherical surface of the fourth lens is R, and -100 mm < R < 100 mm.

16. The optical lens assembly according to claim 14, wherein a focal length of the fourth lens is f4, and the following condition is met: 0.1 ≤ f4/f ≤ 3.

17. The optical lens assembly according to claim 14, wherein a spacing between the fifth lens and the sixth lens is SP5, a spacing between an object-side vertex position of the first lens and an image-side vertex position of the sixth lens is LT, and SP5/LT ≤ 0.2.

18. The optical lens assembly according to claim 1, wherein the object-side surface of the first lens near the optical axis is a convex surface.

19. A camera, comprising a lens barrel and the optical lens assembly according to any one of claims 1 to 18, wherein the optical lens assembly is mounted in the lens barrel.

20. A terminal device, comprising the camera according to claim 19.

10
100

FIG. 1

STO
L1
L2
L3
L4
L5
L6
IRCF
S1
S2
S3
S4
S5
S6
S7
S8
S9
S10
S11
S12
S13
S14
S15

FIG. 2a

Pupil radius: 2.0779 millimeters
Normalized pupil coordinates
1.0
0.8
0.6
0.4
0.2
0
Millimeter
−0.20
−0.16
−0.12
−0.08
−0.04
0
0.04
0.08
0.12
0.16
0.20
0.650
0.610
0.555
0.510
0.470

FIG. 2b

10.84
10.0
+Y
0
–0.05
0
0.05
Millimeter

FIG. 2c

10.84
10.0
0
–1.0
0
1.0
Percentage

FIG. 2d

Maximum field of view: 2.8000 millimeters
5.0
4.0
3.0
2.0
1.0
0
−1.0
−2.0
−3.0
−4.0
−5.0
µm
2.8
2.0
1.0
0

0.6500
0.6100
0.5550
0.5100
0.4700
Airy disk

Field of view: actual image height Unit: millimeter

FIG. 2e

STO
L1
L2
L3
L4
L5
L6
IRCF
S1
S2
S3
S4
S5
S6
S7
S8
S9
S10
S11
S12
S13
S14
S15

FIG. 3a

Pupil radius: 2.1000 millimeters
1.0
0.8
0.6
0.4
0.2
0
−0.05
−0.04
−0.03
−0.02
−0.01
0
0.01
0.02
0.03
0.04
0.05
Millimeter
Normalized pupil coordinates

— 0.650 — 0.610 — 0.555 — 0.510 — 0.470

FIG. 3b

10.92
10.0
+Y
0
–0.05
0
0.05
Millimeter

FIG. 3c

10.92
10.0
0
–1.0
0
1.0
Percentage

FIG. 3d

Maximum field of view: 2.8000 millimeters
2.8
2.0
1.0
0
-5.0
-4.0
-3.0
-2.0
-1.0
0
1.0
2.0
3.0
4.0
5.0
μm
Field of view: actual image height Unit: millimeter
0.6500
0.6100
0.5550
0.5100
0.4700
Airy disk

FIG. 3e

STO
L1
L2
L3
L4
L5
L6
IRCF
S1
S2
S3
S4
S5
S6
S7
S8
S9
S10
S11
S12
S13
S14
S15

FIG. 4a

Pupil radius: 2.1301 millimeters
1.0
0.8
0.6
0.4
0.2
0
Normalized pupil coordinates
−0.020
−0.016
−0.012
−8.0e-3
−4.0e-3
0
4.0e-3
8.0e-3
0.012
0.016
0.020
Millimeter

—0.650 —0.610 —0.555 —0.510 —0.470

FIG. 4b

10.93
10.0
+Y
0
–0.20
0
0.20
Millimeter

FIG. 4c

10.93
10.0
0
–0.05
0
0.05
Percentage

FIG. 4d

Maximum field of view: 2.8000 millimeters
2.8
2.0
1.0
0
-5.0
-4.0
-3.0
-2.0
-1.0
0
1.0
2.0
3.0
4.0
5.0
µm
0.6500
0.6100
0.5550
0.5100
0.4700
Airy disk

Field of view: actual image height Unit: millimeter

FIG. 4e

**INTERNATIONAL SEARCH REPORT**

International application No. **PCT/CN2020/098601**

**A. CLASSIFICATION OF SUBJECT MATTER**

G02B 13/00(2006.01)i; G02B 13/02(2006.01)i; G02B 13/18(2006.01)i

According to International Patent Classification (IPC) or to both national classification and IPC

**B. FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

VEN; CNABS; CNTXT; CNKI; USTXT: 第六, 第6, 透镜, 折射率, 温漂, 温度, 漂移, 系数, TL, TTL, f, 光学总长, 焦距, 焦长, 玻璃, sixth, 6th, lens+, refract+, index, temperature+, drift+, coefficient, focal, length, glass

**C. DOCUMENTS CONSIDERED TO BE RELEVANT**

| Category* | Citation of document, with indication, where appropriate, of the relevant passages | Relevant to claim No. |
|---|---|---|
| X | CN 109696739 A (SAMSUNG ELECTRO-MECHANICS CO., LTD.) 30 April 2019 (2019-04-30) description paragraphs 3-91, figures 1-2 | 1-20 |
| X | CN 109521548 A (LARGAN PRECISION CO., LTD.) 26 March 2019 (2019-03-26) description paragraph 144, paragraphs 225-332, figures 7-23 | 1-20 |
| X | CN 108873271 A (NANCHANG OUFEI PREC OPTICAL PRODUCT CO., LTD.) 23 November 2018 (2018-11-23) description paragraphs 115-133, figures 13-19 | 1-7, 9-12, 18-20 |
| A | CN 108873271 A (NANCHANG OFILM PRECISION OPTICAL PRODUCTS CO., LTD.) 23 November 2018 (2018-11-23) entire document | 8, 13-17 |
| A | CN 109709659 A (LARGAN PRECISION CO., LTD.) 03 May 2019 (2019-05-03) entire document | 1-20 |
| A | US 2016161713 A1 (LARGAN PRECISION CO., LTD.) 09 June 2016 (2016-06-09) entire document | 1-20 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **24 September 2020** | **09 October 2020** |

Name and mailing address of the ISA/CN

**China National Intellectual Property Administration (ISA/CN)**
**No. 6, Xitucheng Road, Jimenqiao Haidian District, Beijing 100088**
**China**

Facsimile No. **(86-10)62019451**

Authorized officer

Telephone No.

Form PCT/ISA/210 (second sheet) (January 2015)

**INTERNATIONAL SEARCH REPORT**
**Information on patent family members**

International application No.
**PCT/CN2020/098601**

| Patent document cited in search report | | | Publication date (day/month/year) | Patent family member(s) | | | Publication date (day/month/year) |
|---|---|---|---|---|---|---|---|
| CN | 109696739 | A | 30 April 2019 | CN | 208937800 | U | 04 June 2019 |
| | | | | KR | 101946262 | B1 | 11 February 2019 |
| | | | | US | 2019121061 | A1 | 25 April 2019 |
| CN | 109521548 | A | 26 March 2019 | TW | I617834 | B | 11 March 2018 |
| | | | | US | 2019086642 | A1 | 21 March 2019 |
| | | | | US | 2020018934 | A1 | 16 January 2020 |
| | | | | TW | 201915540 | A | 16 April 2019 |
| | | | | US | 10466444 | B2 | 05 November 2019 |
| | | | | IN | 201824025371 | A | 22 March 2019 |
| CN | 108873271 | A | 23 November 2018 | CN | 208432785 | U | 25 January 2019 |
| CN | 109709659 | A | 03 May 2019 | US | 2019121081 | A1 | 25 April 2019 |
| | | | | TW | 201917436 | A | 01 May 2019 |
| | | | | TW | I629531 | B | 11 July 2018 |
| | | | | IN | 201824015573 | A | 26 April 2019 |
| US | 2016161713 | A1 | 09 June 2016 | TW | I519809 | B | 01 February 2016 |
| | | | | TW | 201621379 | A | 16 June 2016 |
| | | | | US | 9557532 | B2 | 31 January 2017 |
| | | | | IN | 201501233 | I2 | 05 August 2016 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201910572891
- CN 201910940153